# FASCICULE DE BREVET EUROPEEN

(11) **EP 0 685 674 B1**
(45) Date de publication et mention de la délivrance du brevet: **25.07.2001**
(21) Numéro de dépôt: 95401181.3
(22) Date de dépôt: 22.05.1995
(51) Int. Cl.: F16L 11/04

(54) **Tuyau de transport de carburant**
Kraftstofführendes Rohr
Fuel conducting pipe

(30) Priorité: 31.05.1994 FR 9406588
(43) Date de publication de la demande: 06.12.1995
(73) Titulaire: HUTCHINSON, 75008 Paris (FR)
(72) Inventeur: Andre, Maxime, F-45220 Chateaurenard (FR)
(74) Mandataire: Ramey, Daniel

(56) Documents cités:
- EP-A- 0 542 185
- EP-A- 0 567 947
- EP-A- 0 582 301
- EP-A- 0 582 302
- WO-A-93/21466
- WO-A-93/25835
- DE-U- 9 203 865
- DATABASE WPI Week 9445, Derwent Publications Ltd., London, GB; AN 94-363200 & JP-A-6 286 060 (TOKAI RUBBER) 11 Octobre 1994

## Description

L'invention concerne un tuyau de transport de carburant, notamment pour véhicules automobiles, mais pouvant également être utilisé pour le transport de liquides ou de gaz dans le domaine industriel, ménager ou de la restauration par exemple, ainsi que dans l'industrie pétrolière, chimique ou pharmaceutique.

Les tuyaux de transport de carburant utilisés dans le domaine automobile ont été traditionnellement réalisés en caoutchouc, mais ont tendance à être remplacés actuellement par des tuyaux en matière plastique qui sont moins chers, plus légers et moins encombrants ou par des tuyaux à structure composite comprenant une ou plusieurs couches de matière plastique et une couche de protection extérieure en caoutchouc ou en élastomère vulcanisable (voir par exemple les documents EP0582301 et 0582302, WO93-21466 et 93-25835). Les tuyaux en matière plastique ont pour inconvénients d'être rigides et d'avoir une très mauvaise tenue au feu et une perméabilité au carburant relativement importante, pour une épaisseur de paroi de 1 à 2 mm, tandis que les tuyaux à structure composite ont en général l'inconvénient d'être relativement encombrants en raison d'une forte épaisseur de la couche extérieure de protection en élastomère vulcanisable et/ou en raison d'un nombre relativement important de couches constitutives, avec des problèmes supplémentaires résultant d'une adhérence plus ou moins bonne entre les couches, d'un risque de délaminage et d'un manque de souplesse ou de flexibilité.

Par ailleurs, les règlements applicables à ces tuyaux deviennent de plus en plus sévères, notamment en ce qui concerne l'imperméabilité aux carburants et les tuyaux connus ne sont pas toujours capables de respecter les nouvelles normes, sauf si l'on utilise des matières très imperméables, mais très coûteuses telles que des polymères fluorés.

Il existe donc actuellement un besoin d'un tuyau de transport de carburant qui présente un progrès notable par rapport à la technique connue et qui soit en particulier capable de satisfaire aux conditions suivantes :
- faible prix de revient,
- faible encombrement,
- très bonne tenue au feu,
- souplesse,
- conduction électrique (pour éviter les décharges électrostatiques résultant d'une accumulation de charges électrostatiques par frottement du carburant sur la surface interne du tuyau),
- bonne imperméabilité aux carburants,
- résistance aux chocs à basse température,
- résistance aux agressions physico-chimiques par des agents extérieurs,
- compatibilité avec les systèmes usuels de connexion.

La présente invention a pour objet un tuyau répondant à ce besoin.

Elle propose à cet effet un tuyau de transport de carburant, en particulier pour véhicule automobile, comprenant une couche interne mince de matière thermoplastique ayant de bonnes propriétés d'imperméabilité et de résistance chimique aux carburants et une couche externe de protection en élastomère vulcanisé, dans lequel en ce que la couche interne est reliée à la couche externe d'élastomère vulcanisé par un film d'adhésif du type polyoléfine, polyuréthane ou d'une matière rendue compatible avec celles des couches interne et externe en réalisant cette matière à partir de celle constituant la couche interne et/ou externe, l'épaisseur totale de paroi du tuyau étant inférieure ou égale à 2 mm.

Le tuyau selon l'invention présente des avantages remarquables par rapport à la technique antérieure, en ce qui concerne son prix de revient, sa tenue au feu, son imperméabilité aux carburants, et son encombrement. En outre, sa flexibilité ou sa souplesse est proche de celle des tuyaux classiques en caoutchouc. Les qualités du tuyau selon l'invention sont dues pour une bonne part à une adhérence parfaite entre la couche interne et la couche externe d'élastomère vulcanisé, qui confère au tuyau une cohésion excellente, particulièrement favorable à l'imperméabilité aux carburants et aux caractéristiques mécaniques.

Dans une forme de réalisation préférée de l'invention, l'épaisseur de paroi du tuyau est inférieure ou égale à 1,5 mm et est de préférence égale à 1 mm plus ou moins 0,1 mm.

L'élastomère vulcanisé est de préférence choisi parmi les composants suivants : CSM (polyéthylène chlorosulfoné), ECO (copolymère d'épichloridrine-oxyde d'éthylène), CR (polychloroprène), POE (une polyoléfine élastomère), EPDM ou PVC nitrile, la couche interne du tuyau est en polyamide, de préférence en PA 6, ou en PBT (poly-butylène téréphtalate), ou en POM (poly-oxyméthylène) et l'adhésif précité est une polyoléfine modifiée, par exemple greffée à l'anhydride maléique et/ou réticulée aux silanes, ou du polyuréthane ou une matière rendue compatible avec celles des deux couches précitées.

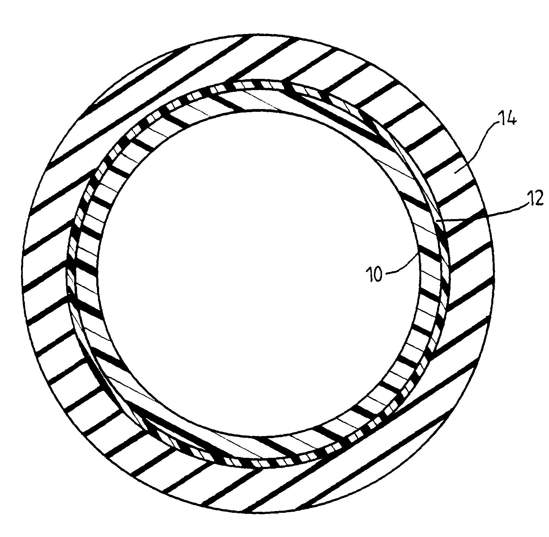

L'invention sera mieux comprise et d'autres avantages de celle-ci apparaîtront plus clairement à la lecture de la description qui suit, faite à titre d'exemple en référence au dessin annexé, qui est une vue schématique en coupe transversale d'un tuyau selon l'invention.

Dans l'exemple de réalisation représenté au dessin, le tuyau selon l'invention est destiné à être utilisé sur un véhicule automobile, par exemple entre l'orifice de remplissage et le réservoir de carburant ou entre le réservoir de carburant et le moteur.

Ce tuyau comprend une couche interne 10 d'un thermoplastique présentant de bonnes propriétés de résistance chimique et d'imperméabilité aux carburants, de préférence du polyamide 6, qui est reliée par un film d'adhésif 12 à une couche externe de protection 14 en élastomère vulcanisable, la somme des épaisseurs des couches 10, 12 et 14 étant inférieure ou égale à 2 mm, avantageusement inférieure ou égale à 1,5 mm et de préférence égale à 1 mm plus ou moins 0,1 mm.

La couche interne est de préférence en polyamide ne comprenant pas de plastifiant, ce qui permet d'améliorer son imperméabilité aux carburants, l'adhésif du film 12 est une polyoléfine formant une barrière à l'alcool et qui est modifiée, par exemple greffée à l'anhydride maléique, pour augmenter son pouvoir adhésif. Cette polyoléfine peut être de plus avantageusement réticulée aux silanes ce qui améliore sa tenue en température ainsi que son adhérence au polyamide de la couche interne 10 et à l'élastomère de la couche externe 14, cette polyoléfine pouvant être du polyéthylène ou du polypropylène.

Cette couche externe 14 est de préférence en CSM mais peut également être réalisée en tout autre élastomère vulcanisable approprié, tel en particulier que ECO, CR, POE, EPDM ou un PVC nitrile.

La couche interne 10 peut aussi être en un thermoplastique tel que du PBT (poly-butylène téréphtalate) ou du POM (poly-oxyméthylène).

En variante, l'adhésif du film 12 peut être une matière des couches interne et externe précitées, par exemple par mélange d'éthylène-propylène greffé à l'anhydride maléique et d'un thermoplastique ou d'un élastomère identique à celui de la couche interne ou de la couche externe respectivement.

On peut aussi former le film 12 d'une couche de la matière précitée compatible avec le thermoplastique de la couche interne 10 et d'une couche de la matière précitée rendue compatible avec l'élastomère de la couche externe 14.

On peut encore incorporer ces deux matières à la couche interne et à la couche externe respectivement, c'est-à-dire modifier les matières de la couche interne et de la couche externe comme précité pour les rendre compatibles entre elles.

L'une des qualités essentielles du tuyau selon l'invention est sa tenue au feu, qui est supérieure à une minute pour un tuyau rempli de carburant sous pression et soumis à une flamme de carburant à une distance de 25 cm.

Ses autres qualités résultent au moins en partie de sa cohésion qui permet de réduire son épaisseur de paroi, d'obtenir une très bonne imperméabilité aux carburants, une souplesse ou une flexibilité comparable à celle du caoutchouc, une facilité de connexion par surmoulage d'un élastomère vulcanisable, la résistance aux chocs à basse température et la résistance aux agressions par des agents extérieurs.

Avantageusement, la couche interne 10 de polyamide peut comprendre un additif électroconducteur, telle qu'une poudre métallique ou du noir de carbone, ce qui élimine les risques d'étincelles par décharge électrostatique.

Le tuyau selon l'invention est avantageusement fabriqué par co-extrusion sur mandrin et par vulcanisation de l'élastomère de la couche extérieure 14.

De façon générale, ce tuyau combine les avantages essentiels d'une bonne imperméabilité aux carburants et d'une bonne tenue au feu pour une faible épaisseur de paroi et un faible prix de revient.

Il est bien entendu applicable au transport de carburant dans le domaine automobile, mais peut également être utilisé pour le transport de fluides dans l'industrie pharmaceutique ou chimique ou tout autre domaine où une faible perméabilité et une tenue au feu sont recherchées.

## Revendications

1. Tuyau de transport de carburant, en particulier pour véhicule automobile, comprenant une couche interne mince (10) de matière thermoplastique ayant de bonnes propriétés d'imperméabilité et de résistance chimique aux carburants, et une couche externe (14) de protection en élastomère vulcanisé, dans lequel la couche interne (10) est reliée à la couche externe (14) d'élastomère vulcanisé par un film (12) d'un adhésif du type polyoléfine, polyuréthane ou d'une matière rendue compatible avec celles des couches interne et externe en réalisant cette matière à partir de celle constituant la couche interne et/ou externe, l'épaisseur totale de paroi du tuyau étant inférieure ou égale à 2 mm.

2. Tuyau selon la revendication 1, caractérisé en ce que son épaisseur de paroi est inférieure ou égale à 1,5 mm.

3. Tuyau selon la revendication 1 ou 2, caractérisé en ce que son épaisseur de paroi est de 1 mm plus ou moins 0,1 mm.

4. Tuyau selon la revendication 3, caractérisé en ce que l'épaisseur de la couche interne (10) est d'environ 0,3 mm, celle du film (12) d'adhésif d'environ 0,1 mm et celle de la couche (14) d'élastomère vulcanisé d'environ 0,6 mm.

5. Tuyau selon l'une des revendications précédentes, caractérisé en ce que l'élastomère vulcanisable est choisi parmi les composés suivants : CSM, ECO, CR, POE, EPDM ou PVC nitrile.

6. Tuyau selon l'une des revendications précédentes, caractérisé en ce que la couche interne (10) est en polyamide, par exemple en polyamide 6, en PBT ou en POM.

7. Tuyau selon la revendication 6, caractérisé en ce que le polyamide de la couche interne (10) ne contient pas de plastifiant.

8. Tuyau selon l'une des revendications précédentes, caractérisé en ce que l'adhésif est une polyoléfine modifiée, par exemple greffée à l'anhydride maléique.

9. Tuyau selon la revendication 8, caractérisé en ce que cette polyoléfine est réticulée aux silanes.

10. Tuyau selon la revendication 8 ou 9, caractérisé en ce que cette polyoléfine est du polyéthylène ou du polypropylène.

11. Tuyau selon l'une des revendications 1 à 7, caractérisé en ce que le film d'adhésif (12) est en polyuréthane ou en au moins une matière rendue compatible avec celles des couches interne et externe (10, 14), par exemple un thermoplastique identique à celui de la couche interne et mélangé à de l'éthylène-propylène greffé à l'anhydride maléique ou un élastomère identique à celui de la couche externe et mélangé à de l'éthylène-propylène greffé à l'anhydride maléique.

12. Tuyau selon la revendication 11, caractérisé en ce que le film d'adhésif (12) est formé d'une couche de matière rendue compatible avec le thermoplastique de la couche interne et d'une couche de matière rendue compatible avec l'élastomère de la couche externe.

13. Tuyau selon la revendication 12, caractérisé en ce que lesdites matières rendues compatibles sont incorporées à la couche interne et à la couche externe respectivement.

14. Tuyau selon l'une des revendications précédentes, caractérisé en ce que la couche interne (10) contient un additif électroconducteur tel qu'une poudre métallique ou du noir de carbone.

## Patentansprüche

1. Schlauch bzw. Rohr für das Fördern von Kraftstoff, insbesondere für ein Kraftfahrzeug, umfassend eine dünne Innenschicht (10) aus thermoplastischem Material, das gute Eigenschaften der Undurchlässigkeit und der chemischen Beständigkeit gegen Kraftstoffe hat, und eine äußere Schutzschicht (14) aus vulkanisiertem Elastomer, worin die Innenschicht (10) mit der äußeren Schicht (14) aus vulkanisiertem Elastomer durch einen Film (12) eines Klebstoffs vom Typ Polyolefin, Polyurethan oder einem anderen Material, das mit jenem der Innenschicht und der äußeren Schicht kompatibel gemacht ist, indem man dieses Material ausgehend von jenem, das die Innenschicht und/oder die äußere Schicht bildet, herstellt, wobei die Gesamtdicke der Wand des Schlauchs bzw. Rohrs kleiner oder gleich 2 mm ist.

2. Schlauch bzw. Rohr gemäß Anspruch 1, dadurch **gekennzeichnet**, daß seine Wanddicke kleiner oder gleich 1,5 mm ist.

3. Schlauch bzw. Rohr gemäß Anspruch 1 oder 2, dadurch **gekennzeichnet**, daß seine Wanddicke 1 mm plus oder minus 0,1 mm ist.

4. Schlauch bzw. Rohr gemäß Anspruch 3, dadurch **gekennzeichnet**, daß die Dicke der Innenschicht (10) ungefähr 0,3 mm, jene des Films (12) aus Klebstoff ungefähr 0,1 mm und jene der Schicht (14) aus vulkanisiertem Elastomer ungefähr 0,6 mm ist.

5. Schlauch bzw. Rohr gemäß einem der vorhergehenden Ansprüche, dadurch **gekennzeichnet**, daß das vulkanisierbare Elastomer unter den folgenden Verbindungen ausgewählt ist: chlorsulfoniertes Polyethylen, Epichioridrin-Ethylenoxid-Copolymer, Polychloropren, Elastomerpolyolefin, EPDM oder PVC-Nitril.

6. Schlauch bzw. Rohr gemäß einem der vorhergehenden Ansprüche, dadurch **gekennzeichnet**, daß die Innenschicht (10) aus Polyamid, z.B. aus Polyamid 6, aus Polybutylenterephthalat oder aus Polyoxymethylen ist.

7. Schlauch bzw. Rohr gemäß Anspruch 6, dadurch **gekennzeichnet**, daß das Polyamid der Innenschicht (10) kein Plastifizierungsmittel enthält.

8. Schlauch bzw. Rohr gemäß einem der vorhergehenden Ansprüche, dadurch **gekennzeichnet**, daß der Klebstoff ein modifiziertes Polyolefin, z.B. das mit Maleinsäure aufpolymerisiert ist bzw. ein Propfpolymer mit Maleinsäureanhydrid ist.

9. Schlauch bzw. Rohr gemäß Anspruch 8, dadurch **gekennzeichnet**, daß dieses Polyolefin mit Silanen vernetzt ist.

10. Schlauch bzw. Rohr gemäß Anspruch 8 oder 9, dadurch **gekennzeichnet**, daß dieses Polyolefin Polyethylen oder Polypropylen ist.

11. Schlauch bzw. Rohr gemäß einem der Ansprüche 1 bis 7, dadurch **gekennzeichnet**, daß der Klebstoffilm (12) aus Polyurethan oder aus wenigstens einem Material ist, das mit jenem der Innenschicht und der äußeren Schicht (10, 14) kompatibel gemacht ist, z.B. ein Thermoplast, das identisch mit jenem der Innenschicht und gemischt ist mit Ethylen-Propylen, das mit Maleinsäureanhydrid aufpolymerisiert ist, bzw. mit Ethylen-Propylen-Pfropfpolymer mit Maleinsäureanhydrid, oder ein Elastomer, welches identisch mit jenem der äußeren Schicht und gemischt ist mit Ethylen-Propylen, das mit Maleinsäureanhydrid aufpolymerisiert ist, bzw. mit Ethylen-Propylen-Propfpolymer mit Maleinsäureanhydrid.

12. Schlauch bzw. Rohr gemäß Anspruch 11, dadurch **gekennzeichnet**, daß der Klebstoffilm (12) von einer Schicht aus Material gebildet ist, welches mit dem Thermoplast der Innenschicht kompatibel gemacht ist, und von einer Schicht aus Material, welches mit dem Elastomer der äußeren Schicht kompatibel gemacht ist.

13. Schlauch bzw. Rohr gemäß Anspruch 12, dadurch **gekennzeichnet**, daß die genannten kompatibel gemachten Materialien in die Innenschicht bzw. in die äußere Schicht inkorporiert sind.

14. Schlauch bzw. Rohr gemäß einem der vorhergehenden Ansprüche, dadurch **gekennzeichnet**, daß die Innenschicht (10) einen elektrisch leitfähigen Zusatz enthält, wie ein Metallpulver oder Ruß.

## Claims

1. A pipe for conveying fuel, in particular for a motor vehicle, the pipe comprising a thin inner layer (10) of thermoplastic material having good properties of impermeability and of chemical inertness relative to fuels, and a protective outer layer (14) of vulcanized elastomer, pipe in which the inner layer (10) is connected to the vulcanized elastomer outer layer (14) by a film (12) of a polyolefin or polyurethane type adhesive, or of a material made compatible with the materials of the inner and outer layers, said compatible material being made from the material constituting the inner and/or the outer layer(s), with the total wall thickness of the pipe being less than or equal to 2 mm.

2. A pipe according to claim 1, characterized in that its wall thickness is less than or equal to 1.5 mm.

3. A pipe according to claim 1 or 2, characterized in that its wall thickness is 1 mm plus-or-minus 0.1 mm.

4. A pipe according to claim 3, characterized in that the thickness of the inner layer (10) is about 0.3 mm, the thickness of the adhesive film (12) is about 0.1 mm, and the thickness of the vulcanized elastomer layer (14) is about 0.6 mm.

5. A pipe according to any preceding claim, characterized in that the vulcanized elastomer is selected from the following substances : CSM, ECO, CR, POE, EPDM, or nitrile PVC.

6. A pipe according to any preceding claim, characterized in that the inner layer (10) is made of polyamide, e.g. polyamide 6, PBT, or POM.

7. A pipe according to claim 6, characterized in that the polyamide of the inner layer (10) does not include plasticizer.

8. A pipe according to any preceding claim, characterized in that the adhesive is a modified polyolefin, e.g. grafted with maleic anhydride.

9. A pipe according to claim 8, characterized in that said polyolefin is cross-linked with silanes.

10. A pipe according to claim 8 or 9, characterized in that the polyolefin is polyethylene or polypropylene.

11. A pipe according to any one of claims 1 to 7, characterized in that the adhesive film (12) is made of polyurethane or at least of a material that is made compatible with the material of the inner and outer layers (10, 14), e.g. a thermoplastic identical to that of the inner layer and mixed with ethylene-propylene grafted with maleic anhydride, or an elastomer identical to that of the outer layer and mixed with ethylene-propylene grafted with maleic anhydride.

12. A pipe according to claim 11, characterized in that the adhesive film (12) is made up of a layer of material made compatible with the thermoplastic of the inner layer and a layer of material made compatible with the elastomer of the outer layer.

13. A pipe according to claim 12, characterized in that said materials that have been made compatible are incorporated in the inner layer and in the outer layer respectively.

14. A pipe according to any preceding claim, characterized in that the inner layer (10) contains an electrically conductive additive such as carbon black or a metal powder.
